# EUROPÄISCHE PATENTANMELDUNG

(11) **EP 4 417 818 A1**
(43) Veröffentlichungstag der Anmeldung: **21.08.2024**
(21) Anmeldenummer: 24153585.5
(22) Anmeldetag: 24.01.2024
(51) Int. Cl.: F04D 25/16, F16H 1/22, F16H 57/02, F16H 57/031, F04D 17/12

(54) **GETRIEBETURBOMASCHINE**

(30) Priorität: 17.02.2023 DE 202023100768 U
(71) Anmelder: ATLAS COPCO ENERGAS GMBH, 50999 Köln (DE)
(72) Erfinder: Stauff, Ulrich, 50969 Köln (DE)
(74) Vertreter: Andrejewski - Honke Patent- und Rechtsanwälte Partnerschaft mbB

(57) **Zusammenfassung**

Die Erfindung betrifft eine Getriebeturbomaschine (1) mit einem Getriebegehäuse (2), mit einem in dem Getriebegehäuse (2) aufgenommenen Großrad (3) und mit zumindest einer ersten Ritzelwelle (6), welche einen ersten Wellenkörper (6a), ein mit dem Großrad (3) kämmendes und in dem Getriebegehäuse (2) angeordnetes mit dem ersten Wellenkörper (6a) verbundenes erstes Ritzel (6b) und zumindest ein mit dem ersten Wellenkörper (6a) verbundenes erstes Turbolaufrad (6c) umfasst, wobei das Getriebegehäuse (2) zumindest ein Gehäuseunterteil (4b) und ein entlang einer zumindest abschnittsweise senkrecht zu einer Vertikalrichtung (z) verlaufenden Hauptteilfuge (5) an das Gehäuseunterteil (4b) anschließendes Gehäuseoberteil (4a) aufweist, wobei ein erster Ritzeldeckel (8) entlang einer ersten Ritzelteilfuge (9) an das Gehäuseoberteil (4a) anschließt und wobei die erste Ritzelwelle (6) in der ersten Ritzelteilfuge (9) angeordnet ist. Erfindungsgemäß besteht die erste Ritzelteilfuge (9) aus einem senkrecht zu der Vertikalrichtung (z) verlaufenden ersten Horizontalabschnitt (9a) und einem unter einem ersten Winkel (α) an den ersten Horizontalabschnitt (9a) anschließenden ersten Vertikalabschnitt (9b).

## Beschreibung

Die Erfindung betrifft eine Getriebeturbomaschine mit einem Getriebegehäuse, mit einem in dem Getriebegehäuse aufgenommenen Großrad und mit zumindest einer ersten Ritzelwelle. Die erste Ritzelwelle weist einen ersten Wellenkörper, ein mit dem Großrad kämmendes, in dem Getriebegehäuse angeordnetes und mit dem ersten Wellenkörper verbundenes Ritzel sowie zumindest ein mit dem ersten Wellenkörper verbundenes erstes Turbolaufrad auf. Das Getriebegehäuse weist zumindest ein Gehäuseunterteil und ein entlang einer zumindest abschnittsweise senkrecht zu einer Vertikalrichtung verlaufenden Hauptteilfuge an das Gehäuseunterteil anschließendes Gehäuseoberteil auf. Ein erster Ritzeldeckel schließt entlang einer ersten Ritzelteilfuge an das Gehäuseoberteil an, wobei die erste Ritzelwelle in der ersten Ritzelteilfuge angeordnet ist.

Eine Turbomaschine dient dazu, die Druck- und/oder Strömungs-Energie ein oder mehrerer Prozessfluide in eine mechanische Drehbewegung umzusetzen und umgekehrt. Hierzu zählen beispielsweise Turbopumpen, Turbokompressoren, Turbo-Expander bzw. Turbinen. Turbomaschinen finden häufig eine Anwendung in verfahrenstechnischen Anlagen und/oder in Anlagen zu Energieumwandlung, wie beispielsweise Kraftwerken oder Anlagen zur Wärmeenergierückgewinnung.

Da häufig mehrere Turbomaschinen parallel betrieben werden, lassen sich diese mechanisch mittels eines Getriebes koppeln. Man spricht in diesem Fall von einer sogenannten Getriebe-Turbomaschinen, von der die Erfindung ausgeht. Die Erfindung betrifft dabei insbesondere Varianten, bei denen ein zentrales Großrad vorgesehen ist, mit dem ein oder mehrere Ritzelwellen kämmen - d. h. derart im mechanischen Eingriff stehen, dass eine Drehbewegung des Großrads auf die Ritzelwellen übertragen wird und umgekehrt. Dazu ist das Großrad um eine zentrale Achse (Großradachse) drehbar in dem Getriebegehäuse aufgenommenen. Durch die mechanische Kopplung stehen die Drehzahlen der einzelnen Ritzelwellen und des Großrads in festen Verhältnissen zueinander und ermöglichen eine Lastverteilung bzw. eine Summierung der Lasten untereinander.

Je nachdem, in welcher Richtung die Energieübertragung erfolgt, kann das Großrad mit einem Energieüberträger zum Antrieb bzw. Abtrieb gekoppelt sein. Die einzelnen Ritzelwellen hingegen sind üblicherweise ohne direkten Antrieb oder Abtrieb - wie beispielsweise durch einen Elektromotor oder Generator - ausgestaltet. Dennoch ist es möglich, dass bei einer Getriebeturbomaschine auf jeweils derselben oder unterschiedlichen Ritzelwellen angetriebene Turbolaufräder (z.B. Verdichterlaufräder) und antreibende Turbolaufräder (z.B. Expanderlaufräder) miteinander kombiniert sind.

Zu Montage- und Wartungszwecken des Getriebes sowie der einzelnen Ritzelwellen, insbesondere der dort angeordneten Turbolaufräder, ist es erforderlich, zeitweise das Getriebegehäuse öffnen zu können. Die Erfindung geht dabei von einer Ausführungsform mit einem Gehäuseunterteil und einem Gehäuseoberteil aus, welche voneinander getrennt werden können, um das Getriebegehäuse zu öffnen. Um das Gehäuseoberteil und das Gehäuseunterteil gegeneinander abzudichten, werden diese gegeneinander verspannt.

Dabei schließen das Gehäuseoberteil und das Gehäuseunterteil entlang einer Hauptteilfuge aneinander an, welche zumindest abschnittsweise senkrecht zu einer Vertikalrichtung verläuft, die insbesondere identisch mit der Schwererichtung ist. Dadurch ist es möglich, dass das Gehäuseoberteil und das Gehäuseunterteil zunächst ohne zusätzliche Sicherung aufeinander aufliegen, ohne dass es hierbei zu einem Abrutschen des Gehäuseoberteils vom Gehäuseunterteil kommt.

Die Erfindung geht weiterhin davon aus, dass zu einer besonders einfachen Montage und Wartung der ersten Ritzelwelle ein erster Ritzeldeckel vorgesehen ist, welcher entlang einer ersten Ritzelteilfuge an das Gehäuseoberteil anschließt. Dabei berühren sich die Hauptteilfuge und die erste Ritzelteilfuge nicht.

Die erste Ritzelwelle ist in der ersten Ritzelteilfuge angeordnet derart, dass sie nach einem Entfernen des ersten Ritzeldeckels entlang der ersten Ritzelteilfuge zugänglich ist und das Entfernen der ersten Ritzelwelle durch das Getriebegehäuse nicht behindert wird. Nach dem Lösen, Öffnen und/oder Entfernen weiterer in dem Getriebegehäuse angeordneter Bestandteile wie beispielsweise Lageranordnungen kann die erste Ritzelwelle dann aus dem Getriebegehäuse entnommen werden.

Gattungsgemäße Getriebeturbomaschinen sind beispielsweise aus DE 10 2015 222 907 A1 und DE 20 2018 107 058 U1 bekannt.

Vor diesem Hintergrund liegt der Erfindung die Aufgabe zugrunde, die Herstellung und Wartung einer Getriebeturbomaschine weiter zu vereinfachen. Dabei soll insbesondere die Montage oder der Austausch einzelner Ritzelwellen vereinfacht werden.

Gegenstand der Erfindung und Lösung dieser Aufgabe ist eine Getriebeturbomaschine nach Schutzanspruch 1. Bevorzugte Ausgestaltungen sind in den abhängigen Unteransprüchen angegeben.

Erfindungsgemäß ist vorgesehen, dass die erste Ritzelteilfuge aus einem senkrecht zu der Vertikalrichtung verlaufenden ersten Horizontalabschnitt und einem unter einem ersten Winkel an den ersten Horizontalabschnitt anschließenden ersten Vertikalabschnitt besteht. Mit anderen Worten bildet das Gehäuseoberteil eine stufenförmige Aufnahme, in die der erste Ritzeldeckel als stumpf-, spitz- oder rechtwinkliger Keil eingesetzt wird. Der erste Horizontalabschnitt und der erste Vertikalabschnitt stoßen dabei an einer ersten Kante unmittelbar aneinander. Am Übergang vom ersten Horizontalabschnitt zum ersten Vertikalabschnitt kann eine - insbesondere technisch bedingte - Rundung mit einem Krümmungsradius von nicht mehr als 5 cm ausgebildet sein.

Der erste Horizontalabschnitt erstreckt sich insbesondere vollständig in einer zu der Vertikalrichtung senkrecht verlaufenden Horizontalebene bis an den - in diesem Bereich durch das Gehäuseoberteil und den ersten Ritzeldeckel gebildeten - Rand des Getriebegehäuses. Dadurch, dass der erste Horizontalabschnitt senkrecht zur Vertikalrichtung (Schwererichtung) verläuft, kann der erste Ritzeldeckel kraftfrei auf einer zugeordneten Auflagefläche des Gehäuseoberteils aufgelegt werden, wobei diese entlang des ersten Horizontalabschnitts aneinander flächig anliegen.

Das erste Turbolaufrad ist vorzugsweise in einem ersten Turbogehäuse angeordnet. Es bildet damit eine erste Turbostufe, bei der ein erstes Prozessfluid von einem ersten Eingangs-Druckniveau durch das rotierende erste Turbolaufrad auf ein erstes Ausgangs-Druckniveau überführt wird. Das erste Eingangs-Druckniveau kann dabei höher oder tiefer als das erste Ausgangs-Druckniveau sein, je nachdem ob es sich bei der ersten Turbostufe eine Kompressorstufe oder eine Expander- bzw. Turbinenstufe handelt.

Gemäß einer bevorzugten Ausgestaltung weist die Getriebeturbomaschine mehrere Turbostufen auf. Diese können unabhängig voneinander und/oder miteinander im Verbund eingesetzt werden. Insbesondere sind zwei oder mehrere, insbesondere sämtliche der von der Getriebeturbomaschine ausgebildeten Turbostufen mit demselben Prozessfluid beaufschlagt. Dabei können die Turbostufen insbesondere in demselben Prozessfluss, insbesondere seriell und/oder parallel zueinander angeordnet sein. Auch ist es möglich, dass die Getriebeturbomaschine mehrerer, voneinander unabhängige Prozessflüsse und/oder -kreisläufe bedient. Beispielsweise kann ein Teil der GetriebeTurbomaschine als mehrstufiger Getriebekompressor ausgebildet sein.

Weiterhin ist es möglich, dass ein oder mehrere Turbostufen in einem Prozessfluss bzw. Kreislauf zur Gewinnung mechanischer Energie aus Wärme ausgebildet sind. So können beispielsweise ein Kompressor und eine Expanderstufe Teil eines Kreisprozesses, insbesondere unter Verwendung superkritischen Kohlenstoffdioxids (SCO2) eingebettet sein.

Vorzugsweise ist vorgesehen, dass auf der ersten Ritzelwelle zumindest ein weiteres Turbolaufrad zur Bildung einer weiteren Turbostufe angeordnet ist. Dabei kann insbesondere vorgesehen sein, dass das weitere Turbolaufrad auf gegenüberliegenden Seite des Großrads im Verhältnis zu dem ersten Turbolaufrad angeordnet ist.

Insbesondere ist das erste Turbolaufrad (und/oder ein etwaiges weiteres Turbolaufrad) fliegend an einem Wellenende der ersten Ritzelwelle angeordnet. Dadurch wird eine besonders platzsparende Anordnung der Turbostufen ermöglicht.

Das erste Turbolaufrad ist bevorzugt in einem ersten Laufradgehäuse aufgenommen, welches an das Getriebegehäuse angesetzt und/oder mit dem Getriebegehäuse einteilig ausgebildet ist. Insbesondere schließt zumindest ein Teil des Getriebegehäuses materialeinheitlich und unterbrechungsfrei an das Getriebegehäuse - bzw. an zumindest einen deren Bestandteile - an.

Gemäß einer ganz besonders bevorzugten Ausgestaltung ist das erst e Laufradgehäuse entlang der ersten Ritzelteilfuge geteilt. Somit ist es möglich, bei bzw. durch ein Abnehmen des ersten Ritzeldeckels ebenfalls das erste Laufradgehäuse zu öffnen. Hierdurch wird eine Entnahme des Turbolaufrads aus dem ersten Laufradgehäuse ermöglicht.

Gemäß einer besonders bevorzugten Ausgestaltung ist der erste Vertikalabschnitt senkrecht zu einer ersten Normalrichtung ausgebildet. Zwischen der ersten Normalrichtung und der Vertikalrichtung ist dabei ebenfalls der erste Winkel eingeschlossen. Gemäß dieser bevorzugten Ausgestaltung erstreckt sich sowohl der erste Horizontalabschnitt vollständig in einer horizontal ausgerichteten Ebene als auch der erste Vertikalabschnitt in einer ersten Vertikalebene, welche gegenüber der Horizontalebene um den ersten Winkel geneigt ist. Diese Ausgestaltung erleichtert sowohl die Befestigung als auch die Abdichtung am Übergang zwischen dem ersten Ritzeldeckel und dem Gehäuseoberteil.

Gemäß einer besonders bevorzugten Ausgestaltung ist der erste Winkel kleiner oder gleich 90°. Gemäß einer ersten bevorzugten Variante beträgt der erste Winkel zwischen 30° und 60°, insbesondere ungefähr 45°.

Gemäß einer alternativen besonders bevorzugten Ausgestaltung beträgt der Winkel genau 90°. Dabei bildet die erste Ritzelteilfuge einen L-förmigen rechtwinkligen Schnitt zwischen dem Gehäuseunterteil und dem ersten Ritzeldeckel. In diesen Konfigurationen kann der Ritzeldeckel besonders einfach von oben in der Vertikalrichtung auf das Gehäuseoberteil aufgesetzt werden.

Vorzugsweise weist die Getriebeturbomaschine eine zweite Ritzelwelle auf, welche einen zweiten Wellenkörper, ein mit dem Großrad kämmendes und in dem Getriebegehäuse angeordnetes mit dem zweiten Wellenkörper verbundenes zweites Ritzel und zumindest ein mit dem zweiten Wellenkörper verbundenes zweites Turbolaufrad umfasst. Das zweite Turbolaufrad ist insbesondere in einer zweiten Laufradkammer angeordnet und bildet eine zweite Turbostufe.

Besonders bevorzugt schließt ein zweiter Ritzeldeckel entlang einer zweiten Ritzelteilfuge an das Gehäuseoberteil an, wobei die zweite Ritzelwelle in der zweiten Ritzelteilfuge angeordnet ist. Die zweite Ritzelteilfuge besteht aus einem senkrecht zu der Vertikalrichtung verlaufenden zweiten Horizontalabschnitt und einem unter einem zweiten Winkel an den zweiten Horizontalabschnitt anschließenden zweiten Vertikalabschnitt. Die Ausbildung eines zweiten gewinkelten Ritzeldeckels ermöglicht ebenfalls das modulare - und von der ersten Ritzelwelle unabhängige - Warten und Entnehmen der zweiten Ritzelwelle.

Besonders bevorzugt verläuft der zweite Vertikalabschnitt senkrecht zu einer zweiten Normalrichtung. Dabei ist zwischen der Vertikalrichtung und der zweiten Normalrichtung ebenfalls der zweite Winkel ausgebildet. Durch die jeweils in einer Ebene ausgebildeten Horizontalabschnitt und Vertikalabschnitt der zweiten Ritzelteilfuge werden Montage und Abdichtung ebenfalls vereinfacht.

Gemäß einer besonders bevorzugten Ausgestaltung sind der erste Winkel und der zweite Winkel gleich groß ausgebildet. Dadurch wird beim ersten Ritzeldeckel und beim zweiten Ritzeldeckel eine ähnliche Beschaffenheit erreicht und die Montage kann vereinheitlicht werden. Gemäß einer besonders bevorzugten Ausgestaltung sind der erste Ritzeldeckel und der zweite Ritzeldeckel untereinander austauschbar, insbesondere identisch ausgebildet.

Besonders bevorzugt ist bei der erfindungsgemäßen Getriebeturbomaschine vorgesehen, dass diese eine Vielzahl von Ritzelwellen aufweist, welche jeweils einen Wellenkörper, ein mit dem Großrad kämmendes und in dem Getriebegehäuse angeordnetes und mit dem Wellenkörper verbundenes Ritzel sowie zumindest jeweils ein mit dem Wellenkörper verbundenes Turbolaufrad umfasst. Jede dieser Ritzelwellen ist dabei entweder in der Hauptteilfuge oder in einer Ritzelteilfuge angeordnet, mit welcher ein Ritzeldeckel an das Gehäuseoberteil anschließt. Sämtliche der Ritzelteilfugen und die Hauptteilfuge sind dabei paarweise untereinander unverbunden. Im Rahmen dieser Ausgestaltung ist eine besonders leichte Montage bzw. Wartung der einzelnen Ritzelwellen möglich. In der Hauptteilfuge können keine, eine oder zwei Ritzelwellen beidseits des Großrads angeordnet sein.

Vorzugsweise besteht jede der Ritzelteilfugen aus einem senkrecht zu der Vertikalrichtung verlaufenden Horizontalabschnitt und einem unter einem Winkel an den Horizontalabschnitt anschließenden Vertikalabschnitt. Dabei ist der Winkel bei jede Ritzelwelle besonders bevorzugt gleich groß ausgebildet.

Weiterhin ist im Rahmen der Erfindung besonders bevorzugt vorgesehen, dass in jeder Ritzelteilfuge genau eine Ritzelwelle angeordnet ist. Der jeweilige Ritzeldeckel, welcher an dieser Ritzelteilfuge an das Gehäuseoberteil (oder gegebenenfalls Gehäuseunterteil) anschließt, ist somit einer konkreten Ritzelwelle zugeordnet. Um diese Ritzelwelle aus dem Getriebegehäuse entnehmen zu können, ist jeweils nur das Entfernen dieses zugeordneten Ritzeldeckels entlang der Ritzelteilfuge erforderlich.

Bei Ausführungsformen mit mehreren Ritzelwellen können diese im Rahmen der Erfindung ebenfalls zusätzliche Turbolaufräder zur Bildung zusätzlicher Turbostufen aufweisen. Gemäß einer besonders bevorzugten Ausgestaltung weist jede der Ritzelwellen jeweils ein oder vorzugsweise zwei fliegend an den Wellenenden der Ritzelwellen angeordnete Turbolaufräder auf.

Vorzugsweise ist das Großrad um eine Großradachse drehbar an dem Gehäuse gelagert, welche gegenüber der Hauptteilfuge vorzugsweise nach oben versetzt angeordnet ist. Nach oben bezeichnet dabei einen Versatz in der Vertikalrichtung (d. h. entgegen der Schwererichtung). Besonders bevorzugt ist ein Versatz um zumindest 5 cm, vorzugsweise zwischen 10 cm und 50 cm, vorgesehen.

Insbesondere ist das Großrad mit einer Großradwelle drehbar an dem Getriebegehäuse gelagert. Besonders bevorzugt ist die Großradwelle um einen Betrag nach oben versetzt, welche größer als der Radius der Großradwelle ist. Dadurch kann das Gehäuseunterteil mit einer durchgehenden Oberkante ausgebildet werden, auf der das Lager für die Großradwelle angeordnet ist. Bei einer nach oben versetzten Großradachse weist die Hauptteilfuge besonders bevorzugt eine Ausbuchtung nach oben auf.

Alternativ kann die Hauptteilfuge durchgehend in einer Ebene verlaufen und die Großradwelle mit einer Wellendurchführung, insbesondere unter Verwendung eines sog. Lagerschilds, aus dem Gehäuseoberteil herausgeführt sein. In diesem Fall weist das Gehäuseunterteil besonders bevorzugt zumindest eine in das Gehäuseoberteil hineinragende Ausbuchtung - einen sogenannten Lagerbock - auf, an der die Großradwelle gelagert ist. Der zumindest eine Lagerbock ist dabei insbesondere einstückig an das Gehäuseunterteil angegossen.

Die Erfindung wird nachfolgend von anhand lediglich Ausführungsbeispiele darstellenden Figuren erläutert. Es zeigen dabei schematisch:
- Fig. 1: eine Seitenansicht einer erfindungsgemäßen Getriebeturbomaschine und
- Fig. 2: eine Draufsicht auf die Getriebeturbomaschine ohne den Deckel des Getriebegehäuses.

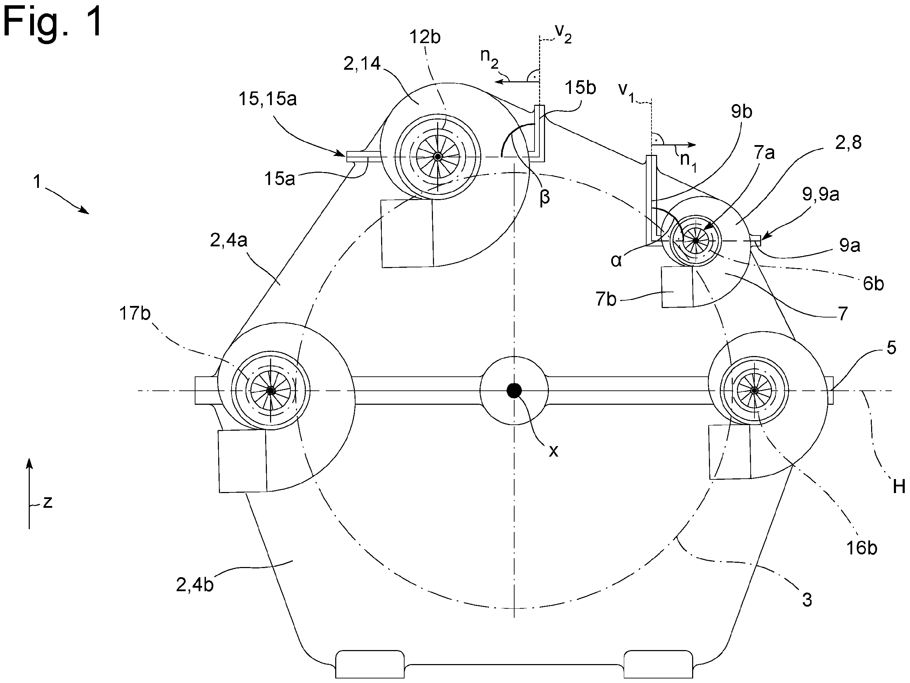

Die Fig. 1 zeigt eine erfindungsgemäße Getriebeturbomaschine 1 mit einem Getriebegehäuse 2, in dem ein Großrad 3 um eine Großradachse x drehbar gelagert ist. Das Getriebegehäuse 2 weist ein Gehäuseoberteil 4a und ein entlang einer Hauptteilfuge 5 an das Gehäuseoberteil 4a anschließendes Gehäuseunterteil 4b auf. Die Hauptteilfuge 5 erstreckt sich dabei ausschließlich in einer Horizontalebene H, welche senkrecht zu einer Vertikalrichtung z verläuft.

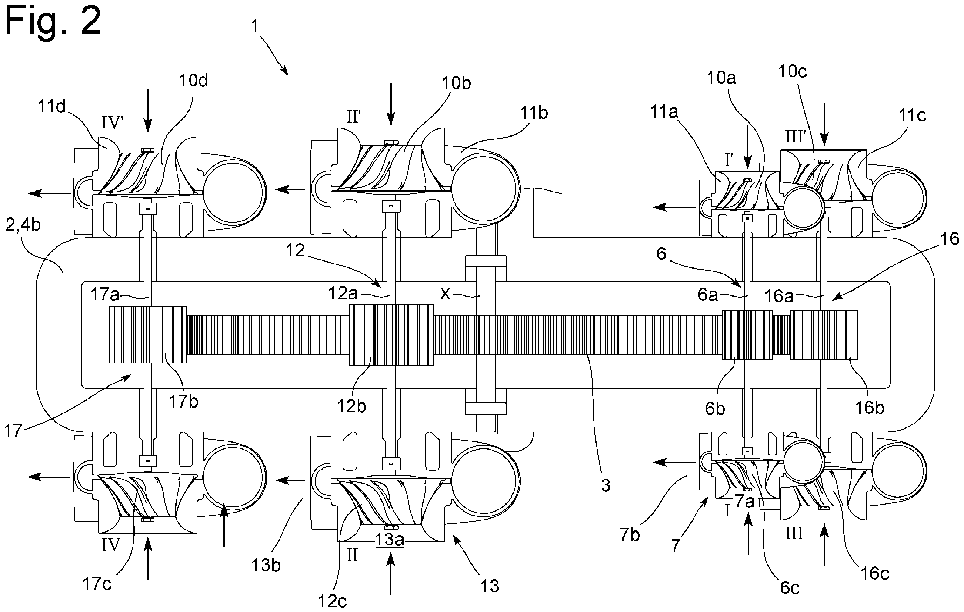

In der Fig. 2 ist die Getriebeturbomaschine 1 in einer Draufsicht ohne das Gehäuseoberteil 4a dargestellt. Dabei ist ersichtlich, dass die Getriebeturbomaschine 1 weiterhin eine erste Ritzelwelle 6 mit einem ersten Wellenkörper 6a und einem mit dem Großrad 3 kämmenden und in dem Getriebegehäuse 2 angeordneten ersten Ritzel 6b aufweist, welches auf dem ersten Wellenkörper 6a angeordnet ist. Weiterhin umfasst die erste Ritzelwelle 6 ein mit dem ersten Wellenkörper verbundenes erstes Turbolaufrad 6c. Das erste Turbolaufrad ist in einem ersten Laufgradgehäuse 7 angeordnet, mit dem es zusammen eine erste Turbostufe I bildet.

In dem dargestellten Ausführungsbeispiel ist die Getriebeturbomaschine 1 als Getriebekompressor ausgebildet, bei der die erste Turbostufe I eine erste Kompressorstufe bildet, welche ein Prozessfluid in einem ersten Einlassbereich 7a ansaugt, verdichtet in einem ersten Auslassbereich 7b mit einem erhöhten Druck ausstößt. Das erste Turbolaufrad 6c ist dabei fliegend an einem Wellenende des ersten Wellenkörpers 6a angeordnet.

Zugeordnet zu der ersten Ritzelwelle 6 schließt an das Gehäuseoberteil 4h ein erster Ritzeldeckel 8 entlang einer ersten Ritzelteilfuge 9 an. Die erste Ritzelwelle 6 ist derart in der ersten Ritzelteilfuge 9 angeordnet, dass nach dem Abnehmen des ersten Ritzeldeckels 8 von dem Gehäuseoberteil 4a eine Entnahme der ersten Ritzelwelle 6 aus dem Getriebegehäuse 2 möglich ist.

Erfindungsgemäß ist vorgesehen, dass die erste Ritzelteilfuge 9 aus einem senkrecht zu der Vertikalrichtung z verlaufenden ersten Horizontalabschnitt 9a und einem unter einem ersten Winkel α an den ersten Horizontalabschnitt 9a anschließenden ersten Vertikalabschnitt 9b besteht. Die erste Ritzelteilfuge 9 erstreckt sich durchgängig von einem Rand des Getriebegehäuses 2 zum anderen und bildet durchgängig die Schnittfläche zwischen dem ersten Ritzeldeckel 8 und dem Gehäuseoberteil 4a. Diese Schnittstelle ist - mit Ausnahme einer nicht dargestellten Wellendurchführung für den ersten Wellenkörper 6a umlaufend abgedichtet, um das Innere des Getriebegehäuses 2 gegenüber der Umgebung abzudichten. Hierdurch wird insbesondere ein Austritt von Schmiermittel (beispielsweise Öl) vermieden, mit dem das Großrad 3 sowie der mit dem Großrad kämmenden Ritzel beaufschlagt werden.

Durch den ersten Wellenkörper 6a wird die erste Ritzelwelle 6 aus dem Getriebegehäuse geführt, sodass das erste Turbolaufrad 6c außerhalb des Getriebegehäuses 2 angeordnet sein kann.

In dem gezeigten Ausführungsbeispiel ist nicht nur die erste Horizontalabschnitt 9a in einer Ebene senkrecht zu der Vertikalrichtung z ausgebildet, sondern auch der erste Vertikalabschnitt 9b. Dieser verläuft in einer ersten Vertikalebene v₁, welche senkrecht zu einer ersten Normalrichtung n₁ verläuft. Dabei ist zwischen der Vertikalrichtung z und der ersten Normalrichtung n₁ ebenfalls der erste Winkel α eingeschlossen. Dieser beträgt dem gezeigten Ausführungsbeispiel 90°. Dabei bildet die erste Ritzelteilfuge 9 einen L-förmigen rechtwinkligen Schnitt, welcher das Getriebegehäuse 2 zwischen dem Gehäuseoberteil 4a und im ersten Ritzeldeckel 8 unterteilt.

Das erste Turbolaufrad 6c ist fliegend an einem Wellenende des Wellenkörpers 6a angeordnet. Auf dem gegenüberliegenden Wellenende ist ein erstes weiteres Turbolaufrad 10a in einem zugeordneten weiteren Laufradgehäuse 11a angeordnet. Hierdurch wird eine erste weitere Turbostufe l' gebildet.

Das erfindungsgemäße Konzept des keilförmigen Ritzeldeckels lässt sich erweitern. So ist bei dem gezeigten Ausführungsbeispiel eine zweite Ritzelwelle 12 mit einem zweiten Wellenkörper 12a, einem mit dem Großrad 3 kämmenden und in dem Getriebegehäuse 2 angeordneten mit dem zweiten Wellenkörper 12a verbundenen zweiten Ritzel 12b und zumindest einem mit dem zweiten Wellenkörper 12a verbundenen zweiten Turbolaufrad 12c umfasst. Das zweite Turbolaufrad 12c ist dabei in einem zweiten Laufradgehäuse 13 angeordnet, welches unmittelbar an das Getriebegehäuse 2 anschließt und in dem ein Prozessfluid von einem Einlassbereich 13a zu einem Auslassbereich 13b gefördert und dabei verdichtet wird. Die Kombination aus dem zweiten Turbolaufrad 12c und dem zweiten Laufradgehäuse 13 bildet eine zweite Turbostufe II (Kompressorstufe) aus.

Wie man der Fig. 1 entnehmen kann, wird ein Teil des Getriebegehäuses 2 durch einen zweiten Ritzeldeckel 14 gebildet, welcher entlang einer zweiten Ritzelteilfuge 15 an das Gehäuseoberteil 4a anschließt. Dabei ist die zweite Ritzelwelle 12 in der zweiten Ritzelteilfuge 15 angeordnet. Die zweite Ritzelteilfuge 15 besteht aus einem senkrecht zu der Vertikalrichtung z verlaufenden zweiten Horizontalabschnitt 15a und einem unter einem zweiten Winkel β an den zweiten Horizontalabschnitt 15a anschließenden zweiten Vertikalabschnitt 15b. In dem gezeigten Ausführungsbeispiel beträgt der zweite Winkel β etwa 90° und ist damit gleich groß wie der erste Winkel α.

Auch der zweite Vertikalabschnitt 15b verläuft senkrecht zu einer zweiten Normalrichtung n₂ in einer zweiten Vertikalebene v₂. Sowohl die erste Normalrichtung n₁ als auch die zweite Normalrichtung n₂ stehen jeweils senkrecht zu der Großradachse x bzw. zu den dazu parallel verlaufenden Drehachsen der Ritzelwellen 6, 12.

Zusätzlich zu der von dem ersten Ritzeldeckel 8 abgedeckten ersten Ritzelwelle 6 und der von dem zweiten Ritzeldeckel 14 abgedeckten zweiten Ritzelwelle 12 weist die erfindungsgemäße Getriebeturbomaschine 1 bei dem gezeigten Ausführungsbeispiel auch eine dritte Ritzelwelle 16 mit einem dritten Wellenkörper 16a, einem auf dem dritten Wellenkörper 16a angeordneten dritten Ritzel 16b und einem mit dem dritten Wellenkörper 16a verbundenen dritten Turbolaufrad 16c auf. Ebenso ist eine vierte Ritzelwelle 17 mit einem vierten Wellenkörper 17a, einen mit dem Großrad 3 kämmenden vierten Ritzel 17b und einem vierten Turbolaufrad 17c ausgebildet.

Sowohl die dritte Ritzelwelle 16 als auch die vierte Ritzelwelle 17 sind beidseits des Großrads 3 in der Hauptteilfuge 5 angeordnet. Jede der Ritzelwellen 6, 12, 16, 17 ist dabei entweder in einer Ritzelteilfuge 9, 15 oder der Hauptteilfuge 5 angeordnet. Dabei fasst jede der Ritzelteilfugen 9, 15 jeweils genau eine Ritzelwelle 6, 12.

Weiterhin ist aus der Fig. 2 ersichtlich dass an der zweiten, dritten und vierten Ritzelwelle 12, 16, 17 jeweils ein zweites, drittes bzw. viertes weiteres Turbolaufrad 10b, 10c, 10d fliegend angeordnet ist, welche in zugeordneten weiteren Laufradgehäusen 11b, 11c, 11d, aufgenommen sind.

## Patentansprüche

1. Getriebeturbomaschine (1) mit einem Getriebegehäuse (2), mit einem in dem Getriebegehäuse (2) aufgenommenen Großrad (3) und mit zumindest einer ersten Ritzelwelle (6), welche einen ersten Wellenkörper (6a), ein mit dem Großrad (3) kämmendes und in dem Getriebegehäuse (2) angeordnetes mit dem ersten Wellenkörper (6a) verbundenes erstes Ritzel (6b) und zumindest ein mit dem ersten Wellenkörper (6a) verbundenes erstes Turbolaufrad (6c) umfasst, wobei das Getriebegehäuse (2) zumindest ein Gehäuseunterteil (4b) und ein entlang einer zumindest abschnittsweise senkrecht zu einer Vertikalrichtung (z) verlaufenden Hauptteilfuge (5) an das Gehäuseunterteil (4b) anschließendes Gehäuseoberteil (4a) aufweist, wobei ein erster Ritzeldeckel (8) entlang einer ersten Ritzelteilfuge (9) an das Gehäuseoberteil (4a) anschließt und wobei die erste Ritzelwelle (6) in der ersten Ritzelteilfuge (9) angeordnet ist, **dadurch gekennzeichnet dass** die erste Ritzelteilfuge (9) aus einem senkrecht zu der Vertikalrichtung (z) verlaufenden ersten Horizontalabschnitt (9a) und einem unter einem ersten Winkel (α) an den ersten Horizontalabschnitt (9a) anschließenden ersten Vertikalabschnitt (9b) besteht.

2. Getriebeturbomaschine (1) nach Anspruch 1, **dadurch gekennzeichnet, dass** der erste Vertikalabschnitt (9b) senkrecht zu einer ersten Normalrichtung (n₁) verläuft.

3. Getriebeturbomaschine (1) nach Anspruch 1 oder 2, **dadurch gekennzeichnet, dass** der erste Winkel (α) kleiner oder gleich 90° ist.

4. Getriebeturbomaschine (1) nach einem der Ansprüche 1 bis 3, **gekennzeichnet durch** eine zweite Ritzelwelle (12), welche einen zweiten Wellenkörper (12a), ein mit dem Großrad (3) kämmendes und in dem Getriebegehäuse (2) angeordnetes mit dem zweiten Wellenkörper (12a) verbundenes zweites Ritzel (12b) und zumindest ein mit dem zweiten Wellenkörper (12a) verbundenes zweites Turbolaufrad (12c) umfasst.

5. Getriebeturbomaschine (1) nach Anspruch 4, **dadurch gekennzeichnet, dass** ein zweiter Ritzeldeckel (14) entlang einer zweiten Ritzelteilfuge (15) an das Gehäuseoberteil (4a) anschließt, dass die zweite Ritzelwelle (12) in der zweiten Ritzelteilfuge (15) angeordnet ist und dass die zweite Ritzelteilfuge (15) aus einem senkrecht zu der Vertikalrichtung (z) verlaufenden zweiten Horizontalabschnitt (15a) und einem unter einem zweiten Winkel (β) an den zweiten Horizontalabschnitt (15a) anschließenden zweiten Vertikalabschnitt (15b) besteht.

6. Getriebeturbomaschine (1) nach Anspruch 5, **dadurch gekennzeichnet, dass** der zweite Vertikalabschnitt (15b) senkrecht zu einer zweiten Normalrichtung (n₂) verläuft

7. Getriebeturbomaschine (1) nach Anspruch 5 oder 6, **dadurch gekennzeichnet, dass** der erste Winkel (α) und der zweite Winkel (β) gleich groß ausgebildet sind.

8. Getriebeturbomaschine (1) nach einem der Ansprüche 4 bis 7, **dadurch gekennzeichnet, dass** die Getriebeturbomaschine (1) eine Vielzahl von Ritzelwellen (6, 12, 16, 17) aufweist, welche jeweils einen Wellenkörper (6a, 12a, 16a, 17a), ein mit dem Großrad (3) kämmendes und in dem Getriebegehäuse (2) angeordnetes und mit dem Wellenkörper (6a, 12a, 16a, 17a) verbundenes Ritzel (6b, 12b, 16b, 17b) und zumindest ein mit dem Wellenkörper (6a, 12a, 16a, 17a) verbundenes Turbolaufrad (6c, 12c, 16c, 17c) umfasst, und dass jede der Ritzelwellen (6, 12, 16, 17) entweder in der Hauptteilfuge (5) oder in einer Ritzelteilfuge (9, 15) angeordnet ist, mit welcher ein Ritzeldeckel (8, 14) an das Gehäuseoberteil (4a) anschließt.

9. Getriebeturbomaschine (1) nach Anspruch 8, **dadurch gekennzeichnet, dass** jede Ritzelteilfuge (9, 15) aus einem senkrecht zu der Vertikalrichtung verlaufenden Horizontalabschnitt (9a, 15a) und einem unter einem Winkel (α, β) an den Horizontalabschnitt (9a, 15a) anschließenden Vertikalabschnitt (9b, 15b) besteht.

10. Getriebeturbomaschine (1) nach Anspruch 9, **dadurch gekennzeichnet, dass** bei jeder Ritzelteilfuge (9, 15) der Winkel (α, β) gleich groß ausgebildet ist.

11. Getriebeturbomaschine (1) nach einem der Ansprüche 1 bis 10, **dadurch gekennzeichnet, dass** in jeder Ritzelteilfuge (9, 15) genau eine Ritzelwelle (6, 12) angeordnet ist.

12. Getriebeturbomaschine (1) nach einem der Ansprüche 1 bis 11, **dadurch gekennzeichnet, dass** das Großrad (3) um eine Großradachse (x) drehbar an dem Getriebegehäuse (2) gelagert ist, welche gegenüber der Hauptteilfuge (5) nach oben versetzt angeordnet ist.

13. Getriebeturbomaschine (1) nach einem der Ansprüche 1 bis 12, **dadurch gekennzeichnet, dass** das erste Turbolaufrad (6c) in einem ersten Laufradgehäuse (7) aufgenommen ist, welches an das Getriebegehäuse (2) angesetzt und/oder mit dem Getriebegehäuse (2) einteilig ausgebildet ist.

14. Getriebeturbomaschine (1) nach Anspruch 13, **dadurch gekennzeichnet, dass** das erste Getriebegehäuse (2) entlang der ersten Ritzelteilfuge (9) geteilt ist.
